# EUROPÄISCHE PATENTSCHRIFT

(11) **EP 3 770 078 B1**
(45) Veröffentlichungstag und Bekanntmachung des Hinweises auf die Patenterteilung: **12.01.2022**
(21) Anmeldenummer: 20194265.3
(22) Anmeldetag: 21.08.2018
(51) Int. Cl.: B65D 30/08, B65D 33/02, B65D 33/10

(54) **HALTESCHLAUFE FÜR EINE KUNSTSTOFFTRAGETASCHE**
HAND STRAP FOR A PLASTIC BAG
BOUCLE DE RETENUE POUR UN SAC À POIGNÉE EN MATIÈRE PLASTIQUE

(30) Priorität: 28.08.2017 DE 202017105180 U
(43) Veröffentlichungstag der Anmeldung: 27.01.2021
(62) Teilanmeldung aus: 18189980.8
(73) Patentinhaber: Papier-Mettler KG, 54497 Morbach (DE)
(72) Erfinder: DONNER, Georg, 54497 Morbach (DE); TROSSEN, Wolfgang, 54497 Morbach (DE)
(74) Vertreter: Metten, Karl-Heinz

(56) Entgegenhaltungen:
- KR-A- 20170 005 995

## Beschreibung

Die vorliegende Erfindung betrifft eine Halteschlaufe für eine Kunststofftragetasche.

Tragetaschen, wie sie üblicherweise vom Handel für den Kunden zum Transport von Waren zur Verfügung gestellt werden, sind regelmäßig aus Plastik oder Papier gefertigt. Waren diese Transportbehältnisse bislang vielfach für den einmaligen Gebrauch vorgesehen, werden nunmehr verstärkt geeignete Transportgebinde nachgefragt, die wiederverwendet werden können. Hierbei sind wiederverwendbare Kunststofftragetaschen häufig größer dimensioniert und verfügen über separat an Vorder- und Rückwand angebrachte Trageschlaufen. Solche herkömmlichen Schlaufentaschen finden sich beispielsweise in der DE 101 16 920 A1, der WO 01/51372 A1 und der DE 40 12 897 A1 offenbart.

Aus der KR 2017/0005995 A ist ein Schüttgutbehälter mit einem daran angenähten Hebering aus einem Gewebeband bekannt. Dabei ist in den Hebering ein versteifendes elastisches Element eingearbeitet, das dazu beiträgt, dass der Hebering eine geöffnete Ringform beibehält, so dass der Schüttgutbehälter von nur einer Person mit Hilfe eines Gabelstaplers erfasst, transportiert und wieder freigegeben werden kann.

Insbesondere bei größer dimensionierten wiederverwendbaren Kunststofftragetaschen kann mitunter eine hinreichende Belastbarkeit bzw. Tragefestigkeit aufgrund mechanischen Verschleißes problematisch sein. Dabei ist ein gewichtsbedingtes Ab- oder Durchreißen einer Trageschlaufe oder im Bereich der Anbringung der Trageschlaufe nicht hinnehmbar. Nicht zuletzt aus diesem Grund stellen die gewerblichen Abnehmer von Schlaufentragetaschen, beispielsweise Kaufhäuser und Großmarktketten, sehr hohe Anforderungen an die Qualität solcher Taschen. Nachteilig an den bekannten größer dimensionierten Schlaufentragetaschen ist noch stets deren recht aufwendige Herstellung.

Der vorliegenden Erfindung lag daher die Aufgabe zugrunde, Tragetaschen aus Kunststoff, insbesondere wiederverwendbare Kunststofftragetaschen, zur Verfügung zu stellen, die nicht mit den Nachteilen der Tragetaschen des Stands der Technik behaftet und die insbesondere für den wiederholten zuverlässigen Transport schwerer Lasten geeignet sind und die sich zudem auf einfache und kostengünstige Weise in maschineller Serienfertigung herstellen lassen.

Die der Erfindung zu Grunde liegende Aufgabe wird gelöst durch eine Halteschlaufe für eine Kunststofftragetasche enthaltend einen ersten flexiblen, insbesondere schlauchförmigen, Hohlkörper und einen zweiten flexiblen, insbesondere schlauchförmigen, Hohlkörper, der zumindest abschnittsweise, insbesondere vollständig, den ersten flexiblen Hohlkörper umhüllt, wobei der erste flexible Hohlkörper aus einem ersten flexiblen Kunststoffmaterialstreifen mit gegenüberliegenden ersten und zweiten Längsseitenrändern gebildet ist, dessen gegenüberliegende erste und zweite Längsseitenränder in einem Überlappungsbereich miteinander verschweißt und/oder verklebt sind und/oder wobei der zweite flexible Hohlkörper aus einem zweiten flexiblen Kunststoffmaterialstreifen mit gegenüberliegenden ersten und zweiten Längsseitenrändern gebildet ist, dessen gegenüberliegende erste und zweite Längsseitenränder in einem zweiten Überlappungsbereich miteinander verschweißt und/oder verklebt sind.

Hierbei sind solche Halteschlaufe bevorzugt, bei denen der erste flexible, insbesondere schlauchförmige, Hohlkörper und der diesen ersten flexiblen Hohlkörper umhüllende zweite flexible, insbesondere schlauchförmige, Hohlkörper zumindest abschnittsweise, insbesondere entlang einer, vorzugsweise kontinuierlichen, Streifenbahn, miteinander verbunden, insbesondere verschweißt, sind.

Hierbei kann gemäß einer bevorzugten Ausführungsform der erfindungsgemäßen Halteschlaufe vorgesehen sein, dass der erste flexible, insbesondere schlauchförmigen, Hohlkörper aus dem ersten flexiblen Kunststoffmaterialstreifen mit gegenüberliegenden ersten und zweiten Längsseitenrändern gebildet ist, dessen gegenüberliegende erste und zweite Längsseitenränder in einem Überlappungsbereich miteinander thermoplastisch verschweißt sind und/oder dass der zweite flexible, insbesondere schlauchförmige, Hohlkörper aus dem zweiten flexiblen Kunststoffmaterialstreifen mit gegenüberliegenden ersten und zweiten Längsseitenrändern gebildet ist, dessen gegenüberliegende erste und zweite Längsseitenränder in einem zweiten Überlappungsbereich miteinander thermoplastisch verschweißt sind.

In einer zweckmäßigen Ausführungsform zeichnen sich die erfindungsgemäßen Halteschlaufen auch dadurch aus, dass der erste Kunststoffmaterialstreifen des ersten flexiblen Hohlkörpers und der zweite Kunststoffmaterialstreifen des zweiten flexiblen Hohlkörpers zumindest abschnittsweise, insbesondere entlang der ersten und zweiten Überlappungsbereiche, miteinander verschweißt, insbesondere thermoplastisch verschweißt, und/oder verklebt sind.

Außerdem sind solche erfindungsgemäßen Halteschlaufe bevorzugt, bei denen der erste flexible Hohlkörper aus dem ersten flexiblen Kunststoffmaterialstreifen mit gegenüberliegenden ersten und zweiten Längsseitenrändern gebildet ist und dass der zweite flexible Hohlkörper aus dem zweiten flexiblen Kunststoffmaterialstreifen mit gegenüberliegenden ersten und zweiten Längsseitenrändern gebildet ist, wobei in dem Überlappungsbereich von erstem und zweitem Längsseitenrand des ersten flexiblen Kunststoffmaterialstreifens der erste Längsseitenrand des ersten Kunststoffmaterialstreifens mit dem ersten Längsseitenrand des zweiten Materialstreifens und dieser erste Längsseitenrand des zweiten Kunststoffmaterialstreifens mit dem zweiten Längsseitenrand des ersten Kunststoffmaterialstreifens verschweißt, insbesondere thermoplastisch verschweißt, und/oder verklebt sind und wobei in dem Überlappungsbereich von erstem und zweitem Längsseitenrand des zweiten flexiblen Kunststoffmaterialstreifens der zweite Längsseitenrand des ersten Kunststoffmaterialstreifens mit dem zweiten Längsseitenrand des zweiten Materialstreifens und dieser zweite Längsseitenrand des ersten Kunststoffmaterialstreifens mit dem ersten Längsseitenrand des zweiten Kunststoffmaterialstreifens verschweißt, insbesondere thermoplastisch verschweißt, und/oder verklebt sind.

Als besonders pragmatisch sowohl bei der Herstellung von Kunststofftragetaschen wie auch bei der Fertigung und Lagerung haben sich solche erfindungsgemäßen Halteschlaufen erwiesen, bei denen diese unter Ausbildung von zwei gegenüberliegenden Längsfaltkanten flächig gepresst vorliegen, wobei die Überlappungsbereiche der gegenüberliegenden ersten und zweiten Längsseitenränder von erstem und zweitem flexiblen Kunststoffmaterialstreifen der ersten und zweiten flexiblen Hohlkörper zwischen den sich gegenüberliegenden Längsfaltkanten sowie insbesondere auf derselben Seite vorliegen.

Die erfindungsgemäßen Halteschlaufen eignen sich überraschenderweise auch für die Herstellung farbiger bzw. mit Information versehener Halteschlaufen, die auch bei mehrfacher Verwendung, beispielsweise durch Abrieb, keine Beeinträchtigungen erfahren. Hierbei kann vorgesehen sein, dass der den zweiten flexiblen Hohlkörper der Halteschlaufe bildende oder enthaltende zweite flexible Kunststoffmaterialstreifen auf einem mindestens abschnittweise transparenten Kunststoffmaterial, insbesondere Polyethylen, basiert, das mindestens abschnittsweise innenseitig, insbesondere mittels Konterdruckverfahren, bedruckter oder bedruckt ist.

Ein besonders hohes Maß an Stabilität und Tragekomfort sowie eine textilartige Anmutung wird bei den erfindungsgemäßen Halteschlaufe auch dadurch erhalten, dass die ersten und/oder zweiten flexiblen Kunststoffmaterialstreifen mindestens abschnittsweise, insbesondere vollflächig, ein Prägemuster aufweisen.

Solche erfindungsgemäßen Halteschlaufen sind besonders bevorzugte, bei denen der erste flexible, insbesondere schlauchförmige, Hohlkörper, insbesondere der erste flexible Kunststoffmaterialstreifen, und/oder der zweite flexible, insbesondere schlauchförmige, Hohlkörper, insbesondere der zweite flexible Kunststoffmaterialstreifen, aus Polyolefinen, insbesondere Polyethylen, gebildet sind oder bestehen. Hierbei wird bevorzugt auf LD-Polyethylen zurückgegriffen.

Hinsichtlich Dauerbelastbarkeit und mechanischer Beanspruchbarkeit sind überraschenderweise solche erfindungsgemäßen Halteschlaufen besonders bevorzugt, bei denen der erste flexible, insbesondere schlauchförmige, Hohlkörper, insbesondere der erste flexible Kunststoffmaterialstreifen, auf einer geschäumten Kunststofffolie, vorzugsweise einer geschäumten Polyolefinfolie, besonders bevorzugt einer geschäumten Polyethylenf olie und insbesondere einer geschäumten LD-Polyethylenfolie, basieren oder hieraus gebildet sind, wobei vorzugsweise der zweite flexible, insbesondere schlauchförmige, Hohlkörper, insbesondere der zweite flexible Kunststoffmaterialstreifen, auf einer nicht geschäumten Kunststofffolie, vorzugsweise einer nicht geschäumten Polyolefinfolie, besonders bevorzugt einer nicht geschäumten Polyethylenfolie und insbesondere einer nicht geschäumten LD-Polyethylenfolie, basiert oder hieraus gebildet ist.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:

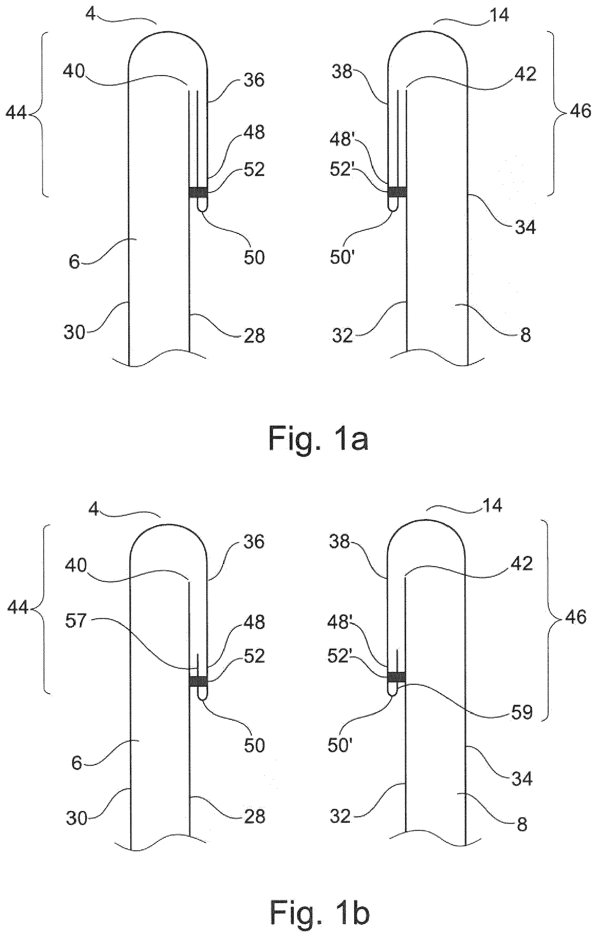

- Figur 1 a): eine schematische Querschnittsansicht eines Ausschnitts einer ersten Ausführungsform einer Kunststofftragetasche;
- Figur 1 b): eine schematische Querschnittsansicht eines Ausschnitts einer Abwandlung der ersten Ausführungsform einer Kunststofftragetasche;
- Figur 2: eine schematische Querschnittsansicht eines Ausschnitts einer zweiten Ausführungsform der Kunststofftragetasche;
- Figur 3: eine schematische Querschnittsansicht eines Ausschnitts einer dritten Ausführungsform der Kunststofftragetasche;
- Figur 4 a): eine schematische Querschnittsansicht eines Ausschnitts einer vierten Ausführungsform der Kunststofftragetasche;

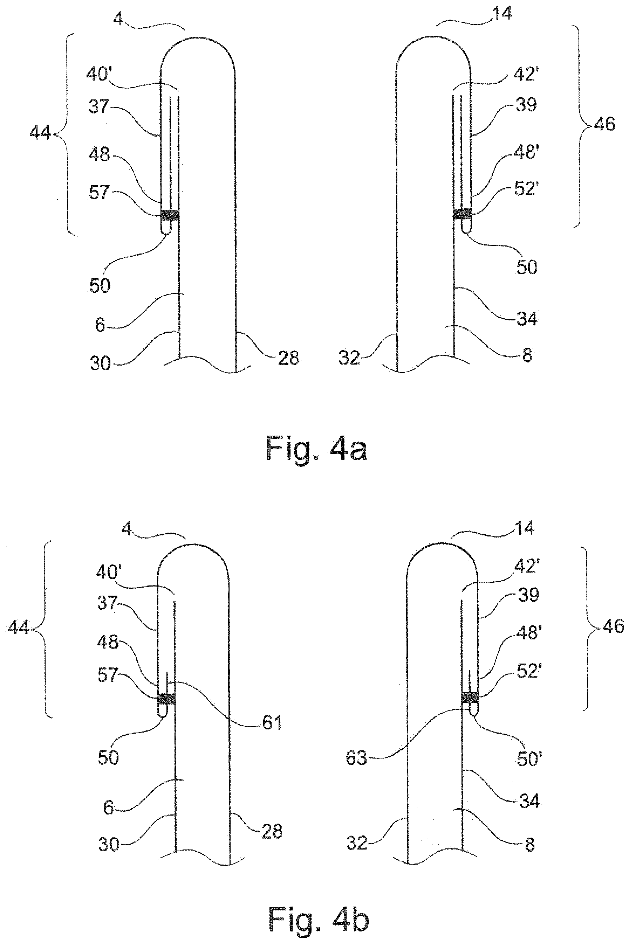

- Figur 4 b): eine schematische Querschnittsansicht eines Ausschnitts einer Abwandlung der vierten Ausführungsform einer Kunststofftragetasche;

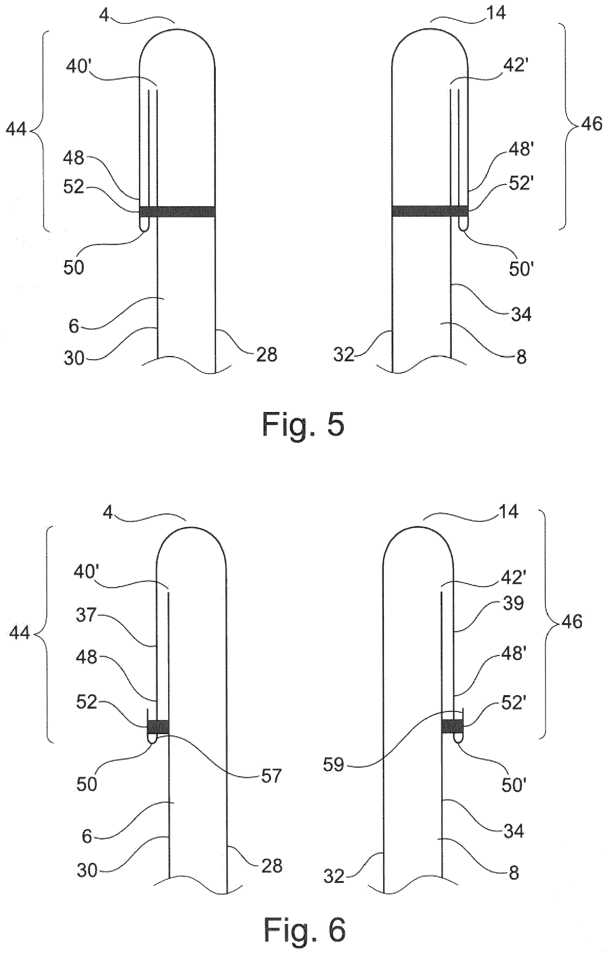

- Figur 5: eine schematische Querschnittsansicht eines Ausschnitts einer fünften Ausführungsform der Kunststofftragetasche;
- Figur 6: eine schematische Querschnittsansicht eines Ausschnitts einer sechsten Ausführungsform der Kunststofftragetasche;

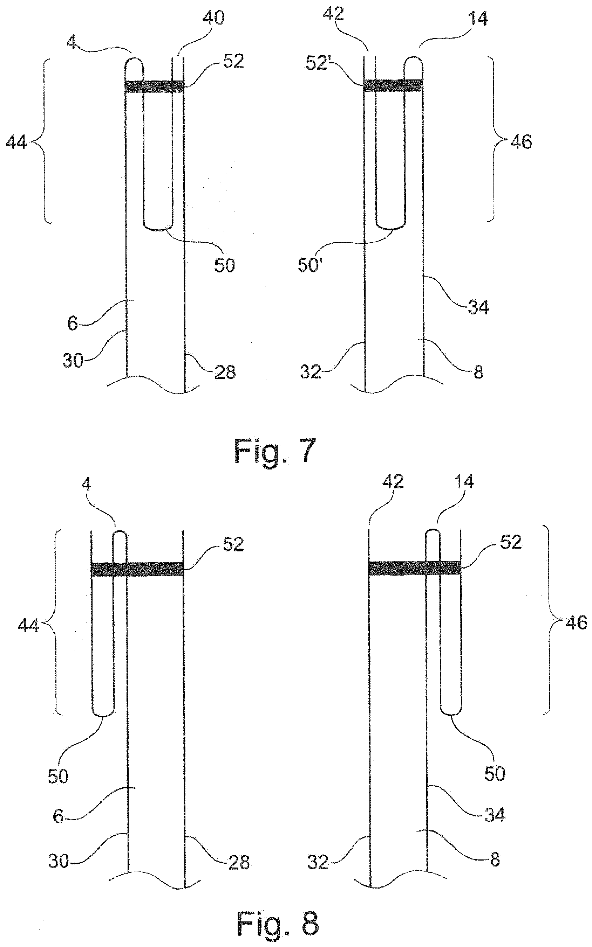

- Figur 7: eine schematische Querschnittsansicht eines Ausschnitts einer siebten Ausführungsform der Kunststofftragetasche;
- Figur 8: eine schematische Querschnittsansicht eines Ausschnitts einer achten Ausführungsform der Kunststofftragetasche;

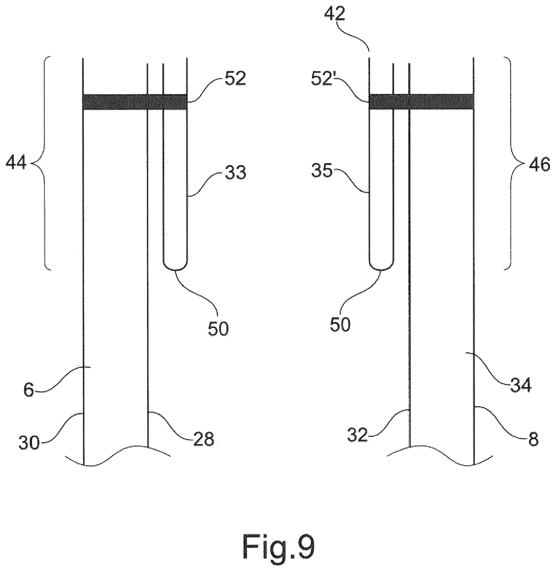

- Figur 9: eine schematische Querschnittsansicht eines Ausschnitts einer neunten Ausführungsform der Kunststofftragetasche;

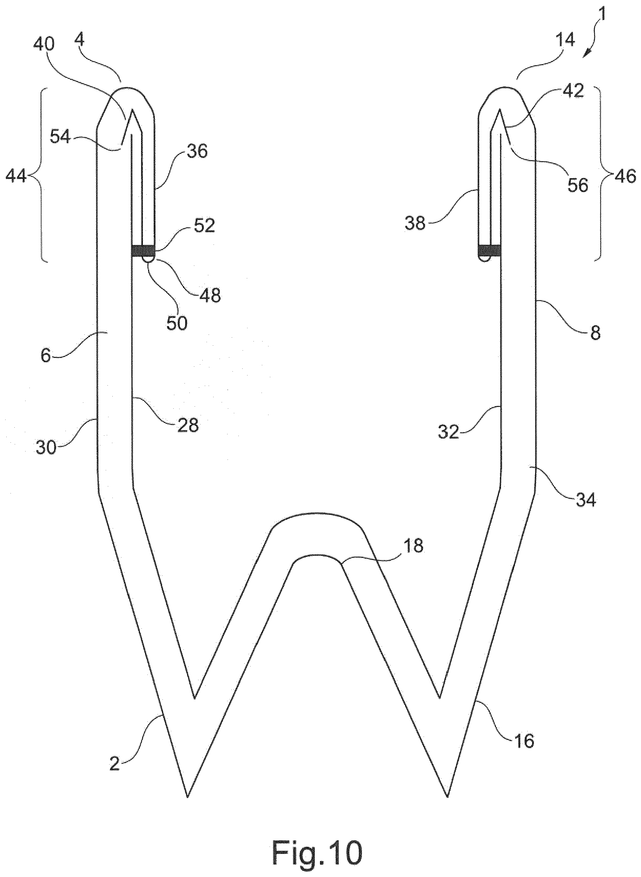

- Figur 10: eine schematische Querschnittsansicht einer zehnten Ausführungsform der Kunststofftragetasche;

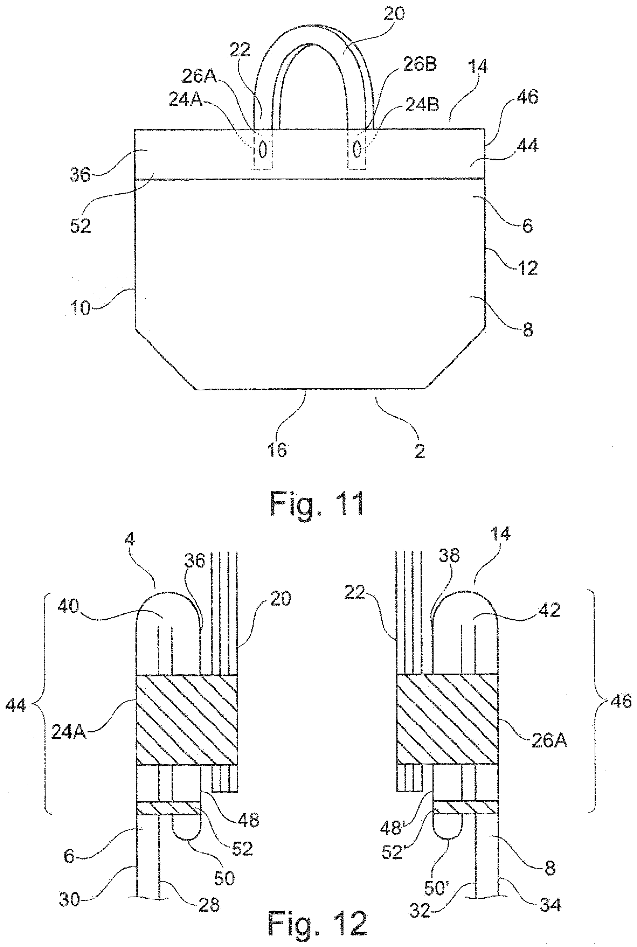

- Figur 11: eine schematische Seitenansicht einer Kunststofftragetasche;
- Figur 12: eine schematische Querschnittsansicht eines Ausschnitts einer elften Ausführungsform einer Kunststofftragetasche;

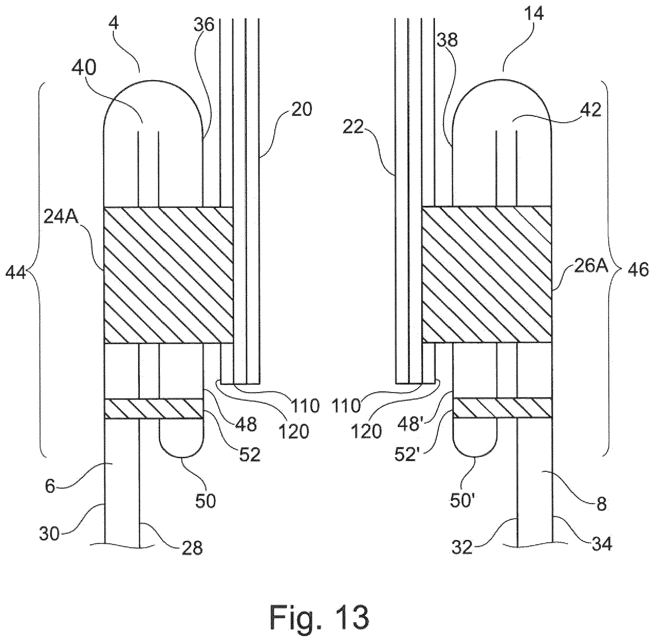

- Figur 13: eine schematische Querschnittsansicht eines Ausschnitts einer zwölften Ausführungsform einer Kunststofftragetasche;

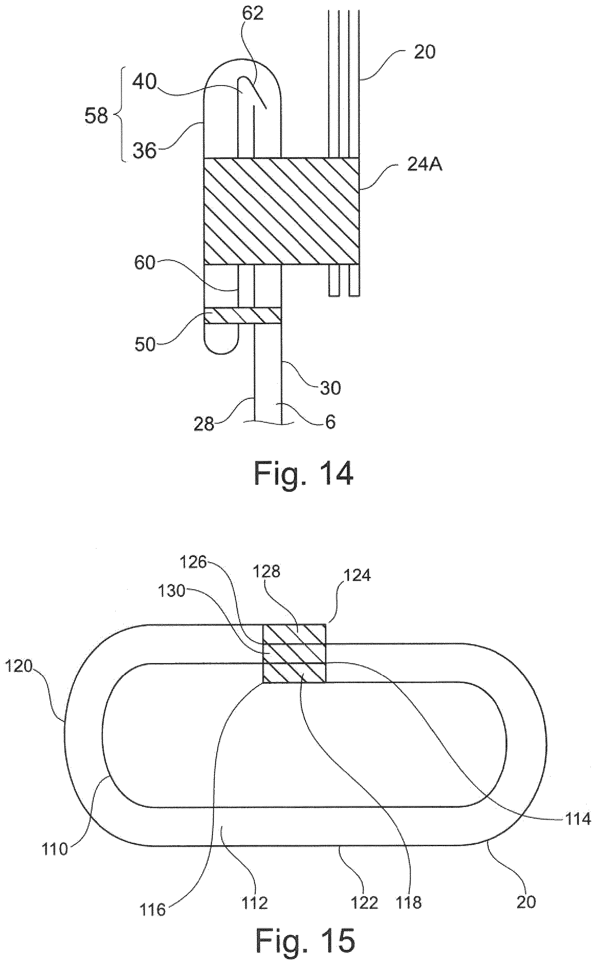

- Figur 14: eine schematische Querschnittsansicht eines Ausschnitts einer dreizehnten Ausführungsform einer Kunststofftragetasche;
- Figur 15: eine schematische laterale Querschnittsansicht einer ersten Ausführungsform einer erfindungsgemäßen Halteschlaufe für eine Kunststofftragetasche;

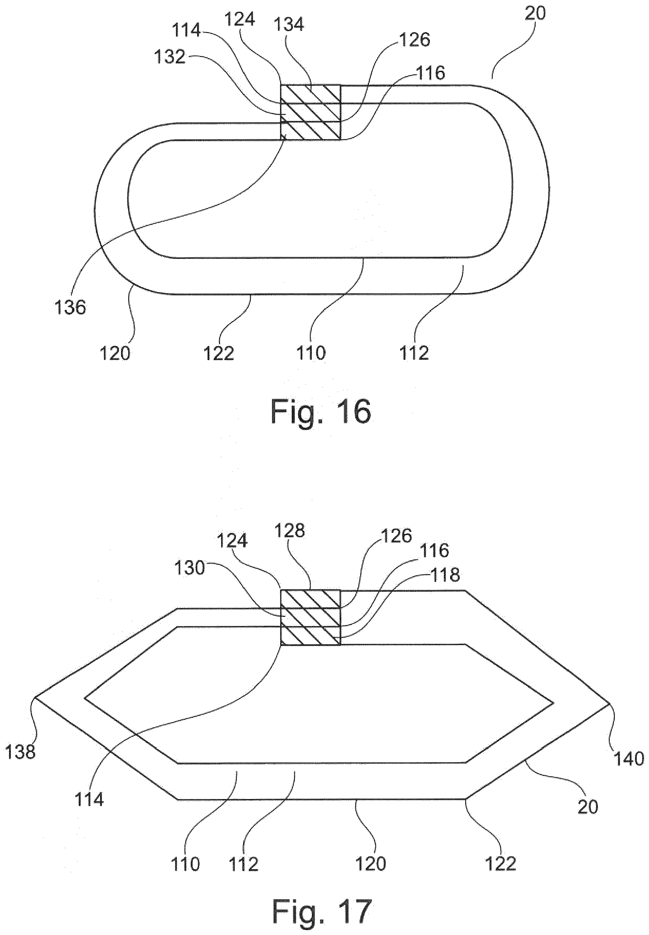

- Figur 16: eine schematische laterale Querschnittsansicht einer zweiten Ausführungsform einer erfindungsgemäßen Halteschlaufe für eine Kunststofftragetasche;
- Figur 17: eine schematische laterale Querschnittsansicht einer dritten Ausführungsform einer erfindungsgemäßen Halteschlaufe für eine Kunststofftragetasche und

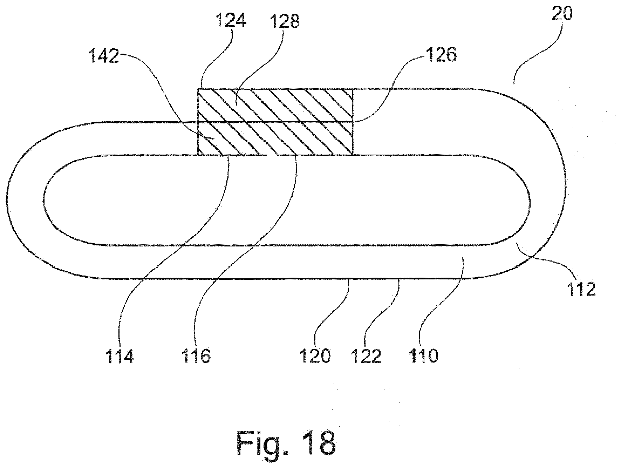

- Figur 18: eine schematische laterale Querschnittsansicht einer vierten Ausführungsform einer erfindungsgemäßen Halteschlaufe für eine Kunststofftragetasche.

Figur 1 a) zeigt eine schematische Querschnittsansicht von Teilen einer Kunststofftragetasche 1. Diese umfasst, wie exemplarisch auch Figur 11 entnommen werden kann, ein Bodenende 2 und ein gegenüberliegendes Öffnungsende 4 mit einer Vorderwand 6 und einer Rückwand 8. Vorder- und Rückwand verfügen über einen Öffnungsrand 14 sowie über einen Bodenrand 16, welche im flächig ausgebreiteten Zustand regelmäßig die maximale Ausdehnung des Korpus der Kunststofftragetasche wiedergeben. Bei der dargestellten Ausführungsform des Ausschnitts einer Kunststofftragetasche 1 sind aus Gründen der leichteren Veranschaulichung die Trageschlaufen nicht mit abgebildet worden. Bei der dargestellten Ausführungsform liegen die Vorderwand 6 und die Rückwand 8 jeweils doppellagig vor, gebildet aus einer Innenlage 28 bzw. 32 und einer Außenlage 30 bzw. 34. Die Außenlage 30 der Vorderwand 6 geht am oberen Ende in einen Fortsetzungsabschnitt 36 über. Dieser ist um den oberen Rand 40 der Innenlage 28 auf deren Innenseite herumgeführt. In der in

Figur 1 a) dargestellten Ausführungsform wird die doppellagige Ausgestaltung des Fortsetzungsabschnitts 36 durch ein zur Innenwand bzw. Innenlage 28 gerichtetes Umschlagen der Folienbahn erreicht, so dass der innenliegende Abschnitt des Fortsetzungsabschnitts 36 in Richtung des oberen Randes 40 der Innenlage 28 geführt wird. Der doppellagig ausgestaltete Fortsetzungsabschnitt 36 wird in der in Figur 1 a) dargestellten Ausführungsform im unteren Bereich 48, vorzugsweise beabstandet von dem Umkehrpunkt 50 mit der Innenlage 28 in einem Verbindungsbereich 52 verschweißt. Es liegt somit im Bereich des Öffnungsendes 4 ein Verstärkungsbereich 44 vor, der zu einer sehr stabilen, mechanisch stark belastbaren und wiederverwendbaren Kunststofftragetasche führt. Die Doppelllagigkeit von Vorder- und Rückwand 6 bzw. 8 erstreckt sich auch bis in den Bodenbereich (s.a. Figur 10).

Demgemäß können in der in Figur 1a) dargestellten Ausführungsform einer Kunststofftragetasche 1 der Fortsetzungsabschnitt 36 der Außenlage 30 der Vorderwand 6, diese Außenlage der Vorderwand sowie die Außenlage 34 Rückwand und der sich daran am oberen Ende anschließende Fortsetzungsabschnitt 38, einschließlich der den Bodenbereich bildende Abschnitt als einstückige Kunststofffolie ausgebildet sein. In gleicher Weise sind bei den in der Figur 1a) bzw. Figur 10 dargestellten Ausführungsformen die Innenlage 28 der Vorderwand 6 und die Innenlage 32 der Rückwand 8, einschließlich der den Bodenbereich bildenden Passage, als einstückige Folienbahn ausgebildet. Die Kunststofftragetasche 1 gemäß Figur 1 a) ist mechanisch stark belastbar und erlaubt den wiederholten Einsatz und das Tragen großer Lasten, ohne etwaige Beeinträchtigungen in Kauf nehmen zu müssen.

Die Ausführungsform einer Kunststofftagetasche 1 gemäß Figur 1 b) unterscheidet sich dadurch von derjenigen gemäß Figur 1 a), dass der umgeschlagene Endabschnitt 57, 59 des Fortsetzungsabschnitts 36, 38 sich nicht bis zum oberen Rand 40, 42 der Innenlage 28, 32 erstreckt, sondern nur geringfügig über die Anbindung beispielsweise mittels Verschweißung 52, 52', des Fortsetzungsabschnitts 36, 38 an die Innenlage 28, 32 hinausgeht. Selbstverständlich ist es ebenfalls möglich, dass die Anbindung bzw. Verschweißung unmittelbar am Ende dieses umgeschlagenen Endabschnitts 57, 59 vorliegt. Dieser umgeschlagene Endabschnitt kann zum Beispiel für viele praktische Anwendungen eine Erstreckung im Bereich von etwa 0,5 bis 1,0 cm oder weniger aufweisen.

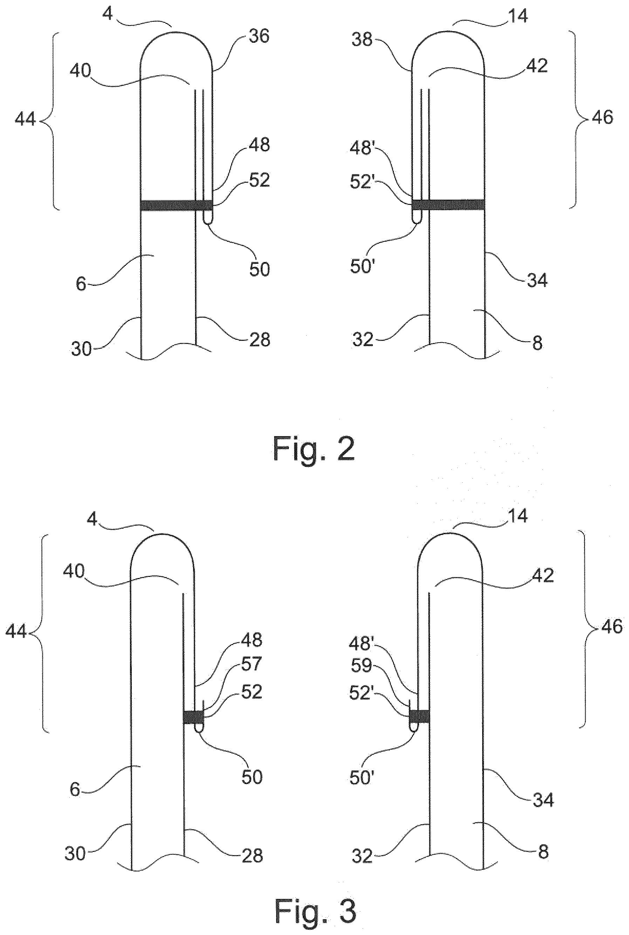

Figur 2 zeigt einen Ausschnitt einer weiteren Ausführungsform einer Kunststofftragetasche 1. Diese unterscheidet sich von der Ausführungsform gemäß Figur 1 a) dadurch, dass die Verschweißung 52 nicht nur den doppellagig ausgestalteten Fortsetzungsabschnitt 36 und die Innenlage 28 umfasst, sondern ebenfalls die Anbindung der Außenlage 30 mit erfasst.

Figur 3 zeigt einen Ausschnitt einer weiteren Ausführungsform einer Kunststofftragetasche 1. Diese unterscheidet sich von der Ausführungsform gemäß Figur 1 b) dadurch, dass die Fortsetzungsabschnitte 36 und 38 dadurch doppellagig ausgestaltet sind, dass das Umschlagen bzw. die Rückfaltung nicht in Richtung der Innenseite der Innenfolie stattfindet, sondern weg von dieser. Auch bei dieser Ausgestaltung erhält man doppellagige Fortsetzungsabschnitte, die zusammen mit den überlappenden Bereichen der Innenlage und den zugehörigen Abschnitten der Außenlagen Verstärkungsabschnitte bilden. Im Unterschied zu der Ausführungsform gemäß Figur 2 sind, ähnlich wie bei der Ausführungsform gemäß Figur 1 b), die umgeschlagenen Abschnitte 57, 59 kurz gehalten und liegen ausschließlich im unteren Bereich 48, 48' des Verstärkungsbereichs vor.

Die Ausführungsform einer Kunststofftragetasche, wie abschnittsweise in Figur 4 a) dargestellt, unterscheidet sich von derjenigen gemäß Figur 1 a) dadurch, dass der Fortsetzungsabschnitte 37, 39 sich nicht an das obere Ende der Außenlagen 30, 34 von Vorder- bzw. Rückwand 6, 8 anschließen, sondern an die entsprechenden Innenlagen 28 und 32. Die Fortsetzungsabschnitte 37, 39 sind demgemäß um den oberen Rand 40' bzw. 42' von Vorderwand 6 und Rückwand 8 doppellagig umgeschlagen. Die Anbindung der derart gebildeten Verstärkungsabschnitte über die Verschweißungslinien 52 bzw. 52' verhält sich analog zu den Schweißlinien der Ausführungsform gemäß Figur 1 a).

Die Ausführungsform einer Kunststofftagetasche 1 gemäß Figur 4 b) unterscheidet sich dadurch von derjenigen gemäß Figur 4 a), dass der umgeschlagene Endabschnitt 61, 63 des Fortsetzungsabschnitts 37, 39 sich nicht bis zum oberen Rand 40', 42' der Außenlage 28, 32 erstreckt, sondern nur geringfügig über die Anbindung beispielsweise mittels Verschweißung 52, 52', des Fortsetzungsabschnitts 37, 39 an die Außenlage 30, 34 hinausgeht. Selbstverständlich ist es ebenfalls möglich, dass die Anbindung bzw. Verschweißung unmittelbar am Ende dieses umgeschlagenen Endabschnitts 61, 63 vorliegt. Dieser umgeschlagene Endabschnitt kann zum Beispiel für viele praktische Anwendungen eine Erstreckung im Bereich von etwa 0,5 bis 1,0 cm oder weniger aufweisen.

Die Ausführungsform gemäß Figur 5 unterscheidet sich von derjenigen gemäß Figur für dadurch, dass die Verschweißung 52 nicht nur den doppellagig ausgestalteten Fortsetzungsabschnitt 36 und die Außenlage 30 umfasst, sondern ebenfalls die Anbindung der Innenlage 28 mit erfasst.

Die Ausführungsform gemäß Figur 6 unterscheidet sich von derjenigen gemäß Figur 5 dadurch, dass die Fortsetzungsabschnitte 36 und 38 dadurch doppellagig ausgestaltet sind, dass das Umschlagen bzw. die Rückfaltung nicht in Richtung der Innenseite der Innenfolie stattfindet, sondern weg von dieser. Wie beispielsweise bei Auch bei dieser Ausgestaltung erhält man doppellagige Fortsetzungsabschnitte, die zusammen mit den überlappenden Bereichen der Außenlage und den zugehörigen Abschnitten der Innenlagen Verstärkungsabschnitte bilden. Ähnlich wie bei der Ausführungsform gemäß Figur 4 b) erstrecken sich der umgeschlagene Endabschnitt 57, 59 des Fortsetzungsabschnitts 37, 39 nicht bis zum oberen Rand 40', 42' der Innenlage 28, 32, sondern nur geringfügig über die Anbindung beispielsweise mittels Verschweißung 52, 52', des Fortsetzungsabschnitts 37, 39 an die Außenlage 30, 34 hinaus.

Bei der Ausführungsform einer Kunststofftragetasche gemäß Figur 7 wird der Verstärkungsbereich 44, 46 durch Umschlagen des Fortsetzungsabschnitts 36, 38 der Außenlage 30, 34 gebildet. Im Unterschied zum Beispiel zu der Ausführungsform gemäß Figur 1 a) wird der Fortsetzungsabschnitt nicht über den oberen Rand 40, 42 der Innenlage 28, 32 herumgeführt. Vielmehr befindet sich der umgeschlagene, doppellagige Fortsetzungsabschnitt an bzw. benachbart zu der Außenseite der Innenlage 28, 32. Die Anbindung von Außenlage, Fortsetzungsabschnitt und Innenlage erfolgt in der dargestellten Ausführungsform über eine sich über sämtliche Lagen erstreckende Schweißverbindung 52, 52'.

Die Ausführungsform einer Kunststofftragetasche gemäß Figur 8 unterscheidet sich von derjenigen gemäß Figur 7 dadurch, dass der Fortsetzungsabschnitt 36, 38, der sich an die Außenlage 30, 34 anschließt, nicht in Richtung der Innenlage 28, 32, sondern abgewandt von dieser umgeschlagen und rückgefaltet wird.

Die Ausführungsform einer Kunststofftragetasche gemäß Figur 9 wird dadurch gebildet, dass ein separater Folienstreifen 33, 35 doppellagig gefaltet jeweils an der Innenlage von Vorder- und Rückwand im oberen Bereich bzw. am oberen Ende der Kunststofftragetasche vorliegt und durch Verschweißung 52, 52' zusammen mit der jeweiligen Innen- und Außenlage einen Verstärkungsbereichs bildet.

Figur 10 zeigt einen schematischen Querschnitt durch eine Ausführungsform einer Kunststofftragetasche 1. Die Innenlagen 28 und 32 von Vorder- und Rückwand 6, 8 sind, einschließlich des Bodenbereichs, einstückig ausgeführt. Das gleiche trifft auf die Außenlagen 30, 34, einschließlich Bodenbereich, von Vorder- und Rückwand zu. Zusätzlich verfügen die Außenlagen über Fortsetzungsabschnitte 36 und 38, welche innenseitig umgeschlagen vorliegen. Im Verstärkungsbereich 44 bzw. 46 ist der gefaltete Fortsetzungsabschnitt 36, 38 mit der Innenlage von Vorder- bzw. Rückwand verschweißt. Zur voluminöseren Gestaltung des oberen Randes der Tragetasche sind die Fortsetzungsabschnitte an ihrem Ende nochmals um den oberen Rand 40 bzw. 42 der Innenlagen von Vorder-und Rückwand umgeschlagen.

Figur 11 zeigt eine Kunststofftragetasche 1 in schematischer Seitenansicht. Der Taschenkorpus umfasst ein Bodenende 2 und ein gegenüberliegendes Öffnungsende 4 mit einer Vorderwand 6 und einer Rückwand 8. Vorder- und Rückwand verfügen über einen Öffnungsrand 14 sowie über einen Bodenrand 16, welche im flächig ausgebreiteten Zustand regelmäßig die maximale Ausdehnung des Korpus der Kunststofftragetasche wiedergeben. Die Halteschlaufen 20 und 22 von Vorder- und Rückwand 6 bzw. 8 sind innenseitig in den Verstärkungsbereichen 44, 46 von Vorder- bzw. Rückwand 6 8 angebracht. Demgemäß sind die jeweiligen Anbindungsbereiche 24A, 24B und 26A, 26B in der dargestellten Version gestrichelt gezeichnet. Auf diese Weise kann die Tragetasche besonders unproblematisch befüllt werden. Auch ist bei der dargestellten Ausführungsform einer Kunststofftragetaschen 1 von besonderem Vorteil, dass die genannten Anbindungsbereiche der Halteschlaufen nicht mit der Verbindungsschweißnaht 52, mit der der Kunststofffolienstreifen bzw. Fortsetzungsabschnitt 36 mit der Vorder- bzw. Rückwand verschweißt ist, überlappen.

In der in Figur 12 dargestellten Ausführungsform liegt der Fortsetzungsabschnitt 36 mit seinem umgeschlagenen Endabschnitt 60 miteinander verschweißt sowie ebenfalls mit der Innenseite der Innenlage 28 mittels Verschweißung verbunden vor. Auch ist die Innenlage an dieser Verbindungsstelle 52 mit der Außenlage 30 mittels Verschweißung verbunden. Die in Figur 12 ebenfalls ausschnittsweise dargestellte Halteschlaufe 20 ist in dem dargestellten ersten Anbindungsbereich 24A innenseitig mit dem umgeschlagenen doppellagigen Fortsetzungsabschnitt 36 verschweißt. Die Halteschlaufe 20 kann hierbei, wie in Figur 12 angedeutet, aus einem ersten flexiblen schlauchförmigen Hohlkörper und einem zweiten flexiblen schlauchförmigen Hohlkörper, der den ersten Hohlkörper umhüllt, gebildet sein. Damit liegt ein erstes schlauchförmiges Gebilde innerhalb eines zweiten schlauchförmigen Gebildes vor. Die ersten und zweiten flexiblen schlauchförmigen Hohlkörper basieren dabei vorzugsweise auf ersten und zweiten flexiblen Kunststoffmaterialstreifen, wobei der erste flexible Kunststoffmaterialstreifen gegenüberliegende erste und zweite Längsseitenränder und umfasst, die in der schlauchförmigen Ausbildung des Hohlkörpers einen Überlappungsbereich ausbilden. In gleicher Weise kann der zweite flexible schlauchförmige Hohlkörper auf einem flexiblen Materialstreifen basieren, der einander gegenüberliegende erste und zweite Längsseitenränder und aufweist, die in der schlauchförmigen Ausgestaltung einen Überlappungsbereich ausbilden. Weitere Details zu diesen Halteschlaufen finden sich nachfolgend im Zusammenhang mit den Figuren 15 bis 18 beschrieben. Ferner liegen in diesem Anbindungsbereich 24A die Außenlage, die Innenlage und der umgeschlagene Fortsetzungsabschnitt 36 jeweils miteinander verschweißt vor. Auf diese Weise wird eine sehr stabile, mechanisch stark belastbare Kunststofftragetasche erhalten. Außerdem kann durch die dargestellte innenseitige Anbringung der Halteschlaufen ein komplikationsloses Befüllen der Kunststofftragetaschen sichergestellt werden. Die oberen Enden bzw. Öffnungsränder werden mithilfe der Trageschlaufen daran gehindert, als Stoßkanten beim Befüllen mit Stückgut zu dienen.

Die Ausführungsform gemäß Figur 13 unterscheidet sich von derjenigen gemäß Figur 12 dadurch, dass nur die Außenseite des Fortsetzungsabschnitts 36, 38 mit der Außenseite des zweiten Hohlkörpers 120 der Halteschlaufe 20, 22 im Anbindungsbereich 24A bzw. 26A verbunden, insbesondere thermoplastisch verschweißt, und wobei darüber hinaus die Innenseite des zweiten Hohlkörpers 120 mit der Außenseite des innenliegenden Hohlkörpers 110 verbunden, insbesondere thermoplastisch verschweißt, vorliegen. Hingegen sind bei dieser Ausführungsform in den Anbindungsbereichen der Halteschlaufen die gegeneinander anliegenden Innenseiten des innenliegenden flexiblen ersten Hohlkörpers 110 nicht miteinander verbunden, insbesondere nicht miteinander thermoplastisch verschweißt, und auch die in Richtung des Tascheninneren, d.h. zur gegenüberliegenden Taschenwand weisende Außenseite des innenliegenden flexiblen ersten Hohlkörpers 110 mit dem hierzu benachbart vorliegenden Abschnitt der Innenseite des außenliegenden flexiblen zweiten Hohlkörpers 120 liegen nicht miteinander verbunden, insbesondere nicht miteinander thermoplastisch verschweißt, vor. Es hat sich überraschend gezeigt, dass auch bei dieser Art der Anbindung der Halteschlaufe an die Kunststofftragetasche im Bereich des Verstärkungsbereichs bereits eine sehr stabile, dauerhaft belastbare, zuverlässig wiederverwendbare Kunststofftragetasche resultiert.

In der in Figur 14 dargestellten Ausführungsform liegt der Fortsetzungsabschnitt 36 mit seinem umgeschlagenen Endabschnitt 60 miteinander verschweißt sowie ebenfalls mit der Innenseite der Innenlage 28 mittels Verschweißung verbunden vor. Auch ist die Innenlage an dieser Verbindungsstelle 52 mit der Außenlage 30 mittels Verschweißung verbunden. Die in Figur 14 ebenfalls ausschnittsweise dargestellte Halteschlaufe 20 ist in dem dargestellten ersten Anbindungsbereich 24A mit der Außenseite der Außenlage 30 verschweißt. Hier sind, ähnlich wie bei der Ausführungsform gemäß Figur 12 und abweichend von Figur 13, sämtliche aneinander im Anbindungsbereich vorliegenden Lagen von erstem und zweitem Hohlkörper der Halteschlaufe miteinander verschweißt. Ferner liegen in diesem Anbindungsbereich 24A die Außenlage, die Innenlage und der umgeschlagene Fortsetzungsabschnitt 36 jeweils miteinander verschweißt vor. Auf diese Weise wird eine sehr stabile, mechanisch stark belastbare Kunststofftragetasche erhalten.

Figur 15 zeigt den Querschnitt durch eine erfindungsgemäße Halteschlaufe 20 für eine Kunststofftragetasche enthaltend einen ersten flexiblen schlauchförmigen Hohlkörper 110 und einen zweiten flexiblen schlauchförmigen Hohlkörper 120, der den ersten Hohlkörper 110 umhüllt. Damit liegt ein erstes schlauchförmiges Gebilde innerhalb eines zweiten schlauchförmigen Gebildes vor. Die ersten und zweiten flexiblen schlauchförmigen Hohlkörper 110, 120 basieren auf ersten und zweiten flexiblen Kunststoffmaterialstreifen 112 und 122, wobei der erste flexible Kunststoffmaterialstreifen 112 gegenüberliegende erste und zweite Längsseitenränder 114 und 116 umfasst, die in der schlauchförmigen Ausbildung des Hohlkörpers 110 einen Überlappungsbereich 118 ausbilden. In gleicher Weise basiert der zweite flexible schlauchförmige Hohlkörper 120 auf einem flexiblen Materialstreifen 122, der einander gegenüberliegende erste und zweite Längsseitenränder 124 und 126 aufweist, die in der schlauchförmigen Ausgestaltung einen Überlappungsbereich 128 ausbilden. Die in Figur 15 dargestellte erfindungsgemäße Ausführungsform einer Halteschlaufe 20 ist derart ausgestaltet, dass die ersten und zweiten Längsseitenränder von erster und zweiter Kunststoffmaterialbahn 112, 122 in den Überlappungsbereichen 118 und 128 jeweils miteinander verschweißt sind. Darüber hinaus bilden die Überlappungsbereiche 118 und 128 ebenfalls einen Überlappungsbereich 130 aus. In diesem liegen die Innenseite des zweiten Längsseitenrandes 126 des äußeren schlauchförmigen Hohlkörpers 120 bzw. des Kunststoffmaterialstreifens 122 und die Außenseite des ersten Längsseitenrandes 114 des innenliegenden schlauchförmigen Hohlkörpers 110 bzw. des ersten flexiblen Kunststoffmaterialstreifens 112 aneinander an bzw. sind einander zugewandt und in der dargestellten Ausführungsform miteinander verbunden, insbesondere verschweißt. Auf diese Weise wird eine sehr stabile und mechanisch belastbare Halteschlaufe für eine Kunststofftragetasche erhalten. Die flexiblen Kunststoffmaterialstreifen 112 und 122 sind dabei vorzugsweise aus demselben Kunststoffmaterial, insbesondere Polyethylen und besonders bevorzugt LD-Polyethylen gefertigt.

Figur 16 zeigt eine weitere Ausführungsform einer erfindungsgemäßen Halteschlaufe 20. Diese unterscheidet sich von der Ausführungsform gemäß Figur 15 durch die Ausbildung der jeweiligen Überlappungsbereiche, in denen die flexiblen ersten und zweiten Kunststoffmaterialstreifen 112 und 122 miteinander verbunden, insbesondere verschweißt vorliegen. So liegen in der dargestellten Ausführungsform der erste Längsseitenrand 114 des ersten flexiblen Kunststoffmaterialstreifens 112 und der zweite Längsseitenrand 126 des zweiten flexiblen Kunststoffmaterialstreifens 122 in einem Überlappungsbereich 132 aneinander an bzw. sind einander zugewandt und sind in diesem Bereich miteinander verbunden, insbesondere verschweißt. Ferner liegt innenseitig zu dem zweiten Längsseitenrand 126 der erste Längsseitenrand 116 des ersten flexiblen Kunststoffmaterialstreifens 112 vor, welche in einem Überlappungsbereich 136 miteinander verbunden, insbesondere verschweißt sind. Dieser Überlappungsbereich 136 ist vorzugsweise im Wesentlichen deckungsgleich mit dem vorangehend geschilderten Überlappungsbereich 132. Entsprechend ist die Außenseite des ersten Längsseitenrandes 114 des ersten Kunststoffmaterialstreifens 112 der Innenseite des ersten Längsseitenrandes 124 des zweiten flexiblen Kunststoffmaterialstreifens 122 zugewandt und in einem Überlappungsbereich 134 miteinander verbunden, insbesondere verschweißt. Vorzugsweise befindet sich der Überlappungsbereich 134 im Wesentlichen in Deckung mit den Überlappungsbereichen 132 und 136.

Figur 17 zeigt eine weitere Ausgestaltung einer erfindungsgemäßen Halteschlaufe 20. Diese Ausführungsform unterscheidet sich von der Halteschlaufe gemäß Figur 15 im Wesentlichen dadurch, dass nicht der erste Längsseitenrand des ersten flexiblen Kunststoffmaterialstreifens 112, sondern der zweite Längsseitenrand 116 an den zweiten Längsseitenrand 126 des zweiten Kunststoffmaterialstreifens 122 im Überlappungsbereich 130 anliegt bzw. diesem zugewandt ist. Demgemäß sind die ersten Längsseitenränder 114 und 124 in der Ausführungsform gemäß Figur 17 weiter voneinander beanstandet als in der Ausführungsform gemäß Figur 15. Ferner ist die Halteschlaufe 100 gemäß Figur 17 flächig gepresst worden, so dass zwei sich gegenüberliegende Längsfaltkanten 138 und 140 vorliegen.

Die flexiblen Kunststoffmaterialstreifen, insbesondere der des zweiten schlauchförmigen Hohlkörpers, das heißt der den außenliegenden Hohlkörper bildende Kunststoffmaterialstreifen kann in einer zweckmäßigen Ausgestaltung mit einem Prägemuster versehen sein (nicht abgebildet). Hierdurch entstehen ein größerer Tragekomfort und eine Haptik, die der einer Textilhalteschlaufe entspricht bzw. nahekommt.

Figur 18 entnimmt man eine weitere Ausführungsform einer erfindungsgemäßen Halteschlaufe 20 hierbei bilden die ersten und zweiten Längsseitenränder 124, 126 des zweiten Kunststoffmaterialstreifens 122 einen Überlappungsbereich 128 aus, in dem sie miteinander verbunden, insbesondere verschweißt, sind. In diesem Überlappungsbereich liegen an der Innenseite des zweiten Längsseitenrandes 126 die ersten und zweiten Längsseitenränder 114, 116 des ersten flexiblen Kunststoffmaterialstreifens 112 an. Diese sind im Unterschied zu den vorangehend dargestellten Ausführungsformen einer erfindungsgemäßen Halteschlaufe nicht überlappend angeordnet und können in einer bevorzugten Ausführungsform aneinander anstoßen. In dem Überlappungsbereich 142 sind diese ersten und zweiten Längsseitenränder 114, 116 mit dem zweiten Längsseitenrand 126 der den zweiten Hohlkörper 120 bildenden Kunststoffmaterialstreifen 122 verbunden, insbesondere verschweißt. Selbstverständlich ist es ebenfalls möglich, dass nur der zweite Längsseitenrand 116 des ersten Kunststoffmaterialstreifens 112 in dem Überlappungsbereich 142 vorliegt und mit dem zweiten Längsseitenrand 126 verbunden, verschweißt ist, während der erste Längsseitenrand 114 des ersten Kunststoffmaterialstreifens 112 benachbart hierzu, d.h. ohne Überlappung mit dem ersten Längsseitenrand 124 des zweiten Kunststoffmaterialstreifens 122 mit der Innenseite des zweiten Kunststoffmaterialstreifens 122 verbunden, insbesondere verschweißt, vorliegt (nicht abgebildet).

Die vorangehend geschilderten Ausführungsformen einer erfindungsgemäßen Halteschlaufe eignen sich insbesondere auch für die Zurverfügungstellung bedruckter Halteschlaufen. So kann durch Bedrucken der Innenseite des zweiten Kunststoffmaterialstreifens, welcher den außenliegenden schlauchförmigen Hohlkörper bildet, eine mit Motiven, Informationen oder in sonstiger Weise farbig ausgestalteter Halteschlaufe erhalten werden, die gegenüber mechanischer Beanspruchung sehr widerstandsfähig ist. Hierfür greift man bevorzugt auf transparente zweite Kunststoffmaterialstreifen zurück, welche innenseitig bedruckt werden, vorzugweise mittels Konterdruckverfahrens.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Halteschlaufe (20, 22) für eine Kunststofftragetasche (1), enthaltend einen ersten flexiblen Hohlkörper (110) und einen zweiten flexiblen Hohlkörper (120), der zumindest abschnittsweise, insbesondere vollständig, den ersten flexiblen Hohlkörper (110) umhüllt, **dadurch gekennzeichnet, dass** der erste flexible Hohlkörper (110) aus einem ersten flexiblen Kunststoffmaterialstreifen (112) mit gegenüberliegenden ersten (114) und zweiten Längsseitenrändern (116) gebildet ist, dessen gegenüberliegende erste (114) und zweite (116) Längsseitenränder in einem Überlappungsbereich (118) miteinander verschweißt und/oder verklebt sind und/oder
dass der zweite flexible Hohlkörper (120) aus einem zweiten flexiblen Kunststoffmaterialstreifen (122) mit gegenüberliegenden ersten (124) und zweiten Längsseitenrändern (126) gebildet ist, dessen gegenüberliegende erste (124) und zweite (126) Längsseitenränder in einem zweiten Überlappungsbereich (128) miteinander verschweißt und/oder verklebt sind.

2. Halteschlaufe (20, 22) nach Anspruch 1, **dadurch gekennzeichnet, dass** der erste flexible Hohlkörper (110) und der diesen ersten flexiblen Hohlkörper (110) umhüllende zweite flexible Hohlkörper (120) zumindest abschnittsweise, insbesondere entlang einer, vorzugsweise kontinuierlichen, Streifenbahn, miteinander verbunden, insbesondere verschweißt, sind.

3. Halteschlaufe (20, 22) nach Anspruch 1 oder 2, **dadurch gekennzeichnet, dass** der erste flexible Hohlkörper (110) aus dem ersten flexiblen Kunststoffmaterialstreifen (112) mit gegenüberliegenden ersten (114) und zweiten (116) Längsseitenrändern gebildet ist, dessen gegenüberliegende erste (114) und zweite (116) Längsseitenränder in einem Überlappungsbereich (118) miteinander thermoplastisch verschweißt sind und/oder dass der zweite flexible Hohlkörper (120) aus dem zweiten flexiblen Kunststoffmaterialstreifen (122) mit gegenüberliegenden ersten (124) und zweiten (126) Längsseitenrändern gebildet ist, dessen gegenüberliegende erste (124) und zweite (126) Längsseitenränder in einem zweiten Überlappungsbereich (128) miteinander thermoplastisch verschweißt sind.

4. Halteschlaufe (20, 22) nach einem der vorangehenden Ansprüche, **dadurch gekennzeichnet, dass**
der erste Kunststoffmaterialstreifen (112) des ersten flexiblen Hohlkörpers (110) und der zweite Kunststoffmaterialstreifen (122) des zweiten flexiblen Hohlkörpers (120) zumindest abschnittsweise, insbesondere entlang der ersten (118) und zweiten (128) Überlappungsbereiche, miteinander verschweißt, insbesondere thermoplastisch verschweißt, und/oder verklebt sind.

5. Halteschlaufe (20, 22) nach einem der vorangehenden Ansprüche, **dadurch gekennzeichnet, dass**
der erste flexible Hohlkörper (110) aus dem ersten flexiblen Kunststoffmaterialstreifen (112) mit gegenüberliegenden ersten (114) und zweiten (116) Längsseitenrändern gebildet ist und dass der zweite flexible Hohlkörper (120) aus dem zweiten flexiblen Kunststoffmaterialstreifen (122) mit gegenüberliegenden ersten (124) und zweiten (126) Längsseitenrändern gebildet ist,
wobei in dem Überlappungsbereich(118) von erstem (114) und zweitem (116) Längsseitenrand des ersten flexiblen Kunststoffmaterialstreifens (112) der erste (114) Längsseitenrand des ersten Kunststoffmaterialstreifens (112) mit dem ersten Längsseitenrand (124) des zweiten Materialstreifens und dieser erste Längsseitenrand (124) des zweiten Kunststoffmaterialstreifens (122) mit dem zweiten (116) Längsseitenrand des ersten Kunststoffmaterialstreifens (112) verschweißt, insbesondere thermoplastisch verschweißt, und/oder verklebt sind und wobei in dem Überlappungsbereich (128) von erstem (124) und zweitem (126) Längsseitenrand des zweiten flexiblen Kunststoffmaterialstreifens (122) der zweite Längsseitenrand (116) des ersten Kunststoffmaterialstreifens (112) mit dem zweiten Längsseitenrand (126) des zweiten Materialstreifens und dieser zweite Längsseitenrand (116) des ersten Kunststoffmaterialstreifens (112) mit dem ersten Längsseitenrand (124) des zweiten Kunststoffmaterialstreifens (122) verschweißt, insbesondere thermoplastisch verschweißt, und/oder verklebt sind.

6. Halteschlaufe (20, 22) nach einem der vorangehenden Ansprüche, **dadurch gekennzeichnet, dass**
der erste flexible Hohlkörper (110), insbesondere der erste flexible Kunststoffmaterialstreifen (112), auf einer geschäumten Kunststofffolie basiert oder hieraus gebildet ist, wobei vorzugsweise der zweite flexible Hohlkörper (120), insbesondere der zweite flexible Kunststoffmaterialstreifen (122), auf einer nicht geschäumten Kunststofffolie basiert oder hieraus gebildet ist.

7. Halteschlaufe (20, 22) nach Anspruch 6, **dadurch gekennzeichnet, dass** die geschäumte Kunststofffolie eine geschäumte Polyolefinfolie, bevorzugt eine geschäumte Polyethylenfolie und besonders bevorzugt eine geschäumte LD-Polyethylenfolie darstellt.

8. Halteschlaufe (20, 22) nach Anspruch 6 oder 7, **dadurch gekennzeichnet, dass** die nicht geschäumte Kunststofffolie eine nicht geschäumte Polyolefinfolie, bevorzugt eine nicht geschäumte Polyethylenfolie und besonders bevorzugt eine nicht geschäumte LD-Polyethylenfolie darstellt.

9. Halteschlaufe (20, 22) nach einem der vorangehenden Ansprüche, **dadurch gekennzeichnet, dass**
der erste flexible Hohlkörper (110) ein schlauchförmiger Hohlkörper ist oder dass der zweite flexible Hohlkörper (120) ein schlauchförmiger Hohlkörper ist oder dass der erste flexible Hohlkörper (110) ein schlauchförmiger Hohlkörper ist und dass der zweite flexible Hohlkörper (120) ein schlauchförmiger Hohlkörper ist.

## Claims

1. A hand strap (20, 22) for a plastic carrier bag (1), containing a first flexible hollow body (110) and a second flexible hollow body (120), which surrounds at least in sections, in particular completely, the first flexible hollow body (110), **characterized in that** the first flexible hollow body (110) is formed from a first flexible plastic material strip (112) with opposite first (114) and second longitudinal side edges (116), the opposite first (114) and second (116) longitudinal side edges of which are heat sealed and/or adhered to one another in an overlapping area (118), and/or
the second flexible hollow body (120) is formed from a second flexible plastic material strip (122) with opposite first (124) and second longitudinal side edges (126), the opposite first (124) and second (126) longitudinal side edges of which are heat sealed and/or adhered to one another in a second overlapping area (128).

2. The hand strap (20, 22) according to Claim 1, **characterized in that** the first flexible hollow body (110) and the second flexible hollow body (120) surrounding said first flexible hollow body (110) are joined to one another at least in sections, in particular heat sealed, in particular along a, preferably continuous, strip web.

3. The hand strap (20, 22) according to Claim 1 or 2, **characterized in that** the first flexible hollow body (110) is formed from the first flexible plastic material strip (112) with opposite first (114) and second (116) longitudinal side edges, the opposite first (114) and second (116) longitudinal side edges of which are thermoplastically sealed to one another in an overlapping area (118), and/or the second flexible hollow body (120) is formed from the second flexible plastic material strip (122) with opposite first (124) and second (126) longitudinal side edges, the opposite first (124) and second (126) longitudinal side edges of which are thermoplastically sealed to one another in a second overlapping area (128).

4. The hand strap (20, 22) according to any one of the preceding claims, **characterized in that**
the first plastic material strip (112) of the first flexible hollow body (110) and the second plastic material strip (122) of the second flexible hollow body (120) are heat sealed to one another at least in sections, in particular along the first (118) and second (128) overlapping areas, in particular thermoplastically sealed, and/or adhered.

5. The hand strap (20, 22) according to any one of the preceding claims, **characterized in that**
the first flexible hollow body (110) is formed from the first flexible plastic material strip (112) with opposite first (114) and second (116) longitudinal side edges and the second flexible hollow body (120) is formed from the second flexible plastic material strip (122) with opposite first (124) and second (126) longitudinal side edges,
wherein in the overlapping area (118) of the first (114) and second (116) longitudinal side edge of the first flexible plastic material strip (112) the first (114) longitudinal side edge of the first plastic material strip (112) is heat sealed to the first longitudinal side edge (124) of the second material strip and said first longitudinal side edge (124) of the second plastic material strip (122) is heat sealed to the second (116) longitudinal side edge of the first plastic material strip (112), in particular thermoplastically sealed, and/or adhered, and wherein in the overlapping area (128) of the first (124) and second (126) longitudinal side edge of the second flexible plastic material strip (122) the second longitudinal side edge (116) of the first plastic material strip (112) is heat sealed to the second longitudinal side edge (126) of the second material strip and said second longitudinal side edge (116) of the first plastic material strip (112) is heat sealed to the first longitudinal side edge (124) of the second plastic material strip (122), in particular thermoplastically sealed, and/or adhered.

6. The hand strap (20, 22) according to any one of the preceding claims, **characterized in that**
the first flexible hollow body (110), in particular the first flexible plastic material strip (112), is based on or formed from a foamed plastic film, wherein the second flexible hollow body (120), in particular the second flexible plastic material strip (122), is preferably based on or formed from a non-foamed plastic film.

7. The hand strap (20, 22) according to Claim 6, **characterized in that** the foamed plastic film represents a foamed polyolefin film, preferably a foamed polyethylene film and, particularly preferably, a foamed LD-polyethylene film.

8. The hand strap (20, 22) according to Claim 6 or 7, **characterized in that** the non-foamed plastic film represents a non-foamed polyolefin film, preferably a non-foamed polyethylene film and, particularly preferably, a non-foamed LD-polyethylene film.

9. The hand strap (20, 22) according to any one of the preceding claims, **characterized in that**
the first flexible hollow body (110) is a hose-like hollow body or **in that** the second flexible hollow body (120) is a hose-like hollow body or **in that** the first flexible hollow body (110) is a hose-like hollow body and **in that** the second flexible hollow body (120) is a hose-like hollow body.

## Revendications

1. Boucle de retenue (20, 22) d'un sac en matière plastique (1), contenant une première cavité souple (110) et une seconde cavité souple (120), qui enveloppe au moins par endroits, notamment complètement, la première cavité souple (110), **caractérisée en ce que**
la première cavité souple (110) est formée par une première bande en matière plastique souple (112) avec des premier (114) et second (116) bords latéraux longitudinaux en vis-à-vis, dont les premier (114) et second (116) bords latéraux longitudinaux en vis-à-vis sont soudés et/ou collés l'un à l'autre dans une zone de recouvrement (118) et/ou
que la seconde cavité souple (120) est formée par une seconde bande en matière plastique souple (122) avec des premier (124) et second (126) bords latéraux longitudinaux en vis-à-vis, dont les premier (124) et second (126) bords latéraux longitudinaux en vis-à-vis sont soudés et/ou collés l'un à l'autre dans une seconde zone de recouvrement (128).

2. Boucle de retenue (20, 22) selon la revendication 1, **caractérisée en ce que** la première cavité souple (110) et la seconde cavité souple (120) enveloppant cette première cavité souple (110) au moins par endroits, notamment le long d'un lé de bande, de préférence continu, sont reliées, notamment soudées l'une à l'autre.

3. Boucle de retenue (20, 22) selon la revendication 1 ou 2, **caractérisée en ce que** la première cavité souple (110) est formée par la première bande en matière plastique souple (112) avec des premier (114) et second (116) bords latéraux longitudinaux en vis-à-vis, dont les premier (114) et second (116) bords latéraux longitudinaux en vis-à-vis sont assemblés l'un avec l'autre par soudage thermoplastique dans une zone de recouvrement (118) et/ou que la seconde cavité souple (120) est formée par la seconde bande en matière plastique souple (122) avec des premier (124) et second (126) bords latéraux longitudinaux en vis-à-vis, dont les premier (124) et second (126) bords latéraux longitudinaux en vis-à-vis sont assemblés l'un avec l'autre par soudage thermoplastique dans une seconde zone de recouvrement (128).

4. Boucle de retenue (20, 22) selon l'une quelconque des revendications précédentes, **caractérisée en ce que**
la première bande en matière plastique souple (112) de la première cavité souple (110) et la seconde bande en matière plastique souple (122) de la seconde cavité souple (120) sont soudées l'une à l'autre, notamment assemblées par soudage thermoplastique et/ou collées au moins par endroits, notamment le long des première (118) et seconde (128) zones de recouvrement.

5. Boucle de retenue (20, 22) selon l'une quelconque des revendications précédentes, **caractérisée en ce que**
la première cavité souple (110) est formée par la première bande en matière plastique souple (112) avec des premier (114) et second (116) bords latéraux longitudinaux en vis-à-vis et que la seconde cavité souple (120) est formée par la seconde bande en matière plastique souple (122) des premier (124) et second (126) bords latéraux longitudinaux en vis-à-vis,
dans laquelle, dans la zone de recouvrement (118) du premier (114) et du second (116) bord latéral longitudinal de la première bande en matière plastique souple (112), la premier bord latéral longitudinal (114) de la première bande en matière plastique souple (112) est soudé au premier bord latéral longitudinal (124) de la seconde bande de matériau et ce premier bord latéral longitudinal (124) de la seconde bande en matière plastique (122) est soudé au second bord latéral longitudinal (116) de la première bande en matière plastique (112), notamment assemblé par soudage thermoplastique, et/ou collé, et
dans laquelle, dans la zone de recouvrement (128) du premier (124) et du second (126) bord latéral longitudinal de la seconde bande en matière plastique souple (122), le second bord latéral longitudinal (116) de la première bande en matière plastique (112) est soudé au second bord latéral longitudinal (126) de la seconde bande de matériau et ce second bord latéral longitudinal (116) de la première bande en matière plastique (112) est soudé au premier bord latéral longitudinal (124) de la seconde bande en matière plastique (122), notamment assemblé par soudage thermoplastique, et/ou collé.

6. Boucle de retenue (20, 22) selon l'une quelconque des revendications précédentes, **caractérisée en ce que**
la première cavité souple (110), notamment la première bande en matière plastique souple (112), est à base d'un film en matière plastique expansée ou en est constituée, dans laquelle de préférence la seconde cavité souple (120), notamment la seconde bande en matière plastique souple (122) est à base d'un film en matière plastique non expansée ou en est constituée.

7. Boucle de retenue (20, 22) selon la revendication 6, **caractérisée en ce que** le film en matière plastique expansée constitue un film en polyoléfine expansée, en particulier un film en polyéthylène expansé et en particulier de préférence un film en polyéthylène bd *(de basse densité)* expansé.

8. Boucle de retenue (20, 22) selon la revendication 6 ou 7, **caractérisée en ce que** le film en matière plastique non expansée constitue un film en polyoléfine non expansée, en particulier un film en polyéthylène non expansé et en particulier de préférence un film en polyéthylène bd non expansé.

9. Boucle de retenue (20, 22) selon l'une quelconque des revendications précédentes, **caractérisée en ce que**
la première cavité souple (110) est une cavité tubulaire ou que la seconde cavité souple (120) est une cavité tubulaire ou que la première cavité souple (110) est une cavité tubulaire et que la seconde cavité souple (120) est une cavité tubulaire.
